# EUROPÄISCHE PATENTSCHRIFT

(11) **EP 0 687 904 B1**
(45) Veröffentlichungstag und Bekanntmachung des Hinweises auf die Patenterteilung: **02.02.2000**
(21) Anmeldenummer: 95107637.1
(22) Anmeldetag: 19.05.1995
(51) Int. Cl.: G01N 27/28

(54) **Elektrodentransport- und Lageranordnung und Verwendung dieser Anordnung**
Electrode transport and storage device and use of this device
Dispositif de transport et d'emmagasinage pour électrodes et utilisation du dispositif

(30) Priorität: 16.06.1994 DE 4421062
(43) Veröffentlichungstag der Anmeldung: 20.12.1995
(73) Patentinhaber: ProMinent Dosiertechnik GmbH, 69123 Heidelberg (DE)
(72) Erfinder: Dulger, Rainer Viktor, D-69124 Heidelberg (DE)
(74) Vertreter: Knoblauch, Andreas, Dr.-Ing.

(56) Entgegenhaltungen:
- EP-A- 0 142 226
- WO-A-92/01218
- DE-A- 2 136 023
- DE-A- 3 215 768
- DE-U- 8 800 157
- FR-A- 2 429 428
- US-A- 4 016 063

## Beschreibung

Die Erfindung betrifft eine Elektrodentransport- und -Lageranordnung mit einer Elektrode und einer Hülle, in die die Elektrode zumindest mit ihrem sensitiven Teil hineinragt und die zusammen mit der Elektrode einen Vorratsraum für eine Flüssigkeit umschließt, wobei die Hülle als formstabiles Gehäuse ausgebildet ist, das mit der Elektrode verbunden ist, wobei zwischen Gehäuse und Elektrode eine Dichtungsanordnung vorgesehen ist, und eine Verwendung einer derartigen Elektrodentransport- und -Lageranordnung.

Elektrochemische Meßelektroden, beispielsweise pH- und Redox-Elektroden müssen naß gelagert werden, d.h. der sensitive Teil der Elektrode muß während der gesamten Lagerungszeit in eine Aufbewahrungslösung eingetaucht sein. Hierfür wird normalerweise eine Elektrolytlösung verwendet. Das gleiche Problem stellt sich natürlich nicht nur für die Zeit der Lagerung, sondern auch für den Transport vom Hersteller zum Verbraucher. Der sensitive Teil der Elektrode ist der Teil, an dem die elektrochemischen Vorgänge ablaufen, die letztendlich für die Bestimmung der gewünschten Meßgröße erforderlich sind.

Bisher hat man für den Transport und die Lagerung derartigen Meßelektroden kleine, mit Elektrolyt gefüllte Silikonkappen verwendet, die etwa die Größe eines Fingerhuts haben und in welche die sensitive Spitze der Elektrode eingesteckt wurde. Diese Silikonkappen dienen somit bei bekannten Anordnung für die gesamte Lagerungszeit bis zur Anwendung als Vorratsgefäß für die Elektrolytlösung. Aufgrund der Elastizität der Silikonkappen konnte sich die jeweilige Kappe relativ dicht an die Elektrodenspitze anlegen, so daß der Vorratsraum einigermaßen dicht abgeschlossen war, so daß keine Elektrolytlösung aus dem Vorratsraum heraustropfen konnte.

Problematisch ist allerdings, daß die meisten für die Lagerung der Elektroden verwendeten Lösungen eine starke Kriechneigung haben. Trotz des dichten Anliegens der Silikonkappen führt dies dazu, daß die Flüssigkeit aus dem Vorratsraum entweicht und die Kappen austrocknen. Ein derartiger Vorgang erstreckt sich zwar über mehrere Wochen oder sogar Monate. Er führt jedoch dazu, daß die Lagerungszeit derartiger Elektroden begrenzt ist. Üblicherweise können daher derartige Elektroden nicht länger als sechs Monate gelagert werden, bis sie beim Anwender eingesetzt werden. Diese begrenzten Lagerungszeiten zwingen zu einem relativ schnellen Umschlag der Elektroden und erschweren damit die Lagerhaltung von solchen Elektroden, die nicht so oft benötigt werden.

US-A-4 016 063 zeigt eine Elektrodentransport- und Lageranordnung mit den Merkmalen des Oberbegriffs des Anspruchs 1.

DE-A-32 15 768 zeigt eine Elektrodenanordnung für pH-Wert- und ähnliche Messungen in Flüssigkeiten. Bei dieser Anordnung sind eine Meßelektrode und ein Temperaturfühler in einem gemeinsamen Stopfen angeordnet, der auf einen Köcher aufgesteckt werden kann. Der Temperaturfühler ist hierbei klemmend in den Stopfen gehalten, so daß er entfernt kann, bevor die Elektrode mit dem Stopfen weggeworfen wird. Der Temperaturfühler ist daher mehrfach verwendbar. Das Gehäuse ist als Köcher ausgebildet, in dem die Meßelektrode aufbewahrt und transportiert werden kann.

WO-A-92 01218 zeigt einen Elektrodenhalter, der dafür vorgesehen ist, Messungen in einer vorbeiströmenden Flüssigkeit auszuführen und zwar ohne die Strömung zu unterbrechen. Hierzu ist die eigentliche Elektrode in ein Gehäuse eingeschraubt. Das Gehäuse wiederum weist mehrere Öffnungen auf, durch die die zu überwachende Flüssigkeit eintreten kann, um an die Elektrodenspitze zu gelangen. Das Gehäuse wiederum ist in einen Halter eingesetzt und dort mit Hilfe einer Gewindeverbindung befestigt. Durch Drehen des Gehäuses in dem Halter läßt sich die axiale Position der Fenster verändern, so daß diese entweder aus dem Halter herausschauen können oder in den Halter zurückgezogen sind. Der Halter kann mit einer Überwurfmutter auf einem Stutzen befestigt werden, der auf einem Rohr angeordnet ist, durch den die zu überwachende Flüssigkeit strömt. Verschiedene O-Ringe sind vorgesehen, um ein Austreten der Flüssigkeit aus dem Rohr zu verhindern.

EP-A-0 142 226 offenbart eine Elektrodenanordnung mit einem Tank, der eine Standardisierungslösung enthält. Die Spitze der Elektrode ist von einer Kappe abgedeckt. Wenn man diese Kappe weiter auf das Elektrodengehäuse aufschraubt, öffnet sie ein Ventil, woraufhin eine kleine Menge der Standardisierungslösung in den von der Kappe umschlossenen Hohlraum eindringt. Man kann dann die Meßelektrode kalibrieren. Nach Abschrauben der Kappe kann die Flüssigkeit weggeworfen werden und die aus dem Gehäuse herausragende Elektrodenspitze kann in die zu messende Flüssigkeit eingetaucht werden.

Der Erfindung liegt die Aufgabe zugrunde, die Lager- und Transportmöglichkeiten von Meßelektroden zu verbessern.

Diese Aufgabe wird bei einer Elektrodentransport- und-Lageranordnung der eingangs genannten Art dadurch gelöst, daß die Elektrode ein Außengewinde und das Gehäuse an seinem offenen Ende ein Innengewinde aufweist und die Elektrode und das Gehäuse miteinander verschraubt sind und die Dichtungsanordnung einen Dichtring aufweist, der zwischen der Elektrode und dem Gehäuse eingespannt ist.

Bei dieser Anordnung kann die Aufbewahrungsflüssigkeit für die Elektrode mit einer höheren Zuverlässigkeit in dem Vorratsraum gehalten werden. Die Elektrode selbst weist eine gewisse Steifigkeit auf. Nunmehr ist auch das Gehäuse formstabil ausgebildet, d.h. es verformt sich beim Auftreten von Kräften nicht oder nicht merklich. Bei dieser Ausgestaltung ist es nun möglich, durch eine Dichtungsanordnung zwischen dem Gehäuse und der Elektrode eine verbesserte Dichtigkeit zu erreichen. Diese Dichtigkeit ist so groß, daß selbst ein Kriechen der Aufbewahrungsflüssigkeit mit hoher Zuverlässigkeit verhindert wird. Falls ein derartiges Kriechen dennoch auftritt, sind die Verluste so gering, daß auch nach einer längeren Lagerungszeit noch genügend Aufbewahrungsflüssigkeit im Gehäuse vorhanden ist, um zumindest den sensitiven Teil der Elektrode in ausreichender Art und Weise zu benetzen. Man kann daher die Lagerdauer der Elektroden auf acht oder mehr Monate verlängern. Die Lagerhaltung wird dadurch vereinfacht. Man kann großzügiger disponieren und ist auch bei wenig gebrauchten Elektrodenformen und -arten mit geringerem Aufwand in der Lage, eine derartige Elektrode vorrätig zu halten. Die Verbindung zwischen Elektrode und Gehäuse muß nicht formschlüssig sein. Es reicht aus, wenn bei dieser Verbindung eine ausreichende Haltekraft erzeugt wird. Dies kann bereits mit geeigneten Steckverbindungen erzielt werden. Die Verbindungskraft muß lediglich groß genug sein, um einerseits die Elektrode zuverlässig im Gehäuse festzuhalten und andererseits die Dichtungsanordnung so zu beaufschlagen, daß keine Lücken oder Spalte oder sonstige Öffnungen zwischen Gehäuse und Elektrode entstehen, durch die die Aufbewahrungsflüssigkeit aus dem Vorratsraum entweichen könnte. Darüber hinaus hat das Gehäuse natürlich auch den Vorteil, daß die Elektrode nun nicht mehr nur in eine Flüssigkeit eingetaucht ist, sondern auch mechanisch geschützt ist. Dies erleichtert insbesondere den Transport. Die meisten Meßelektroden weisen ohnehin ein Außengewinde auf, mit dem sie am Meßort in eine dort befindliche Meßanordnung eingeschraubt werden können. Dieses Gewinde kann man vorteilhafterweise verwenden, um die Elektrode im Gehäuse zu befestigen. Die Verschraubung gewährleistet einen Sitz der Elektrode im Gehäuse, der fest genug ist, um die Elektrode dort sicher und in der gewünschten Position zu halten.

In einer bevorzugten Ausführungsform weist die Elektrode einen Schaft auf, der sich von einem Abschnitt zur Befestigung des Schaftes bis zu einer Spitze erstreckt und der den sensitiven Teil enthält, wobei sich das Gehäuse zumindest über die Länge des Schaftes erstreckt. Der Schaft ist ein mechanisch empfindliches Teil. Durch diese Ausgestaltung wird der Schaft durch das Gehäuse zuverlässig geschützt. Der Befestigungsabschnitt ist bei den Elektroden ohnehin vorgesehen. Er dient dazu, die Elektrode am Meßort in einer Meßvorrichtung zu befestigen. Wenn nun das Gehäuse so lang ist, daß es sich mindestens über die Länge des Schaftes erstreckt, kann man zur Befestigung der Elektrode im Gehäuse den ohnehin an der Elektrode vorhandenen Befestigungsabschnitt verwenden. An der Elektrode müssen also keine weiteren Modifikationen vorgenommen werden. Die Elektrode hält dann im Gehäuse genau so zuverlässig wie in der Meßvorrichtung.

Vorzugsweise umgibt das Gehäuse den Schaft mit allseitigem Abstand. Dies hat zum einen mechanische Vorteile. Der Schaft hält allseits einen Sicherheitsabstand zum Gehäuse ein, so daß kleinere Stöße nicht unmittelbar auf den Elektrodenschaft übertragen werden. Der Schaft hat vielmehr kleinere Bewegungsmöglichkeiten. Zum anderen wird durch diese Ausgestaltung sichergestellt, daß die Aufbewahrungsflüssigkeit den Elektrodenschaft bzw. den sensitiven Teil der Elektrode allseitig umgibt. Kein Teil des Schaftes wird von der Wand des Gehäuses abgedeckt. Damit ist sichergestellt, daß die Aufbewahrungsflüssigkeit den gewünschten Teil der Elektrode zuverlässig benäßt.

Vorteilhafterweise weist das Gehäuse ein Flüssigkeitskontrollfenster auf oder besteht aus durchsichtigem Material. Dadurch läßt sich sehr einfach der Vorrat an Aufbewahrungsflüssigkeit, beispielsweise der Elektrolytvorrat, in dem Gehäuse visuell kontrollieren. Sollte durch irgendwelche Umstände einmal tatsächlich der Flüssigkeitsstand soweit abgesunken sein, daß die gewünschten Lagerbedingungen nicht mehr eingehalten werden, kann man dann Aufbewahrungsflüssigkeit nachfüllen.

Hierbei ist besonders bevorzugt, daß die Dichtungsanordnung dem Außengewinde benachbart angeordnet ist. Die Dichtungsanordnung befindet sich dann also unmittelbar an der Befestigungsstelle. Gerade hier ist aber eine relativ genaue Zuordnung von Gehäuse und Elektrode vorhanden, so daß die Dichtungsanordnung mit einem geringen konstruktiven Aufwand eine hohe Zuverlässigkeit erreichen kann.

Vorzugsweise ist der Dichtring zwischen einem umlaufenden Vorsprung an der Elektrode und einer umlaufenden Schulter im Gehäuse eingespannt. Der Dichtring ist also sozusagen axial, also in Längsrichtung der Elektrode und des Gehäuses, belastet. Dies ist aber die Richtung, entlang der die Elektrode in das Gehäuse eingeschoben wird. Beim Einschieben kann man dann die notwendigen Dichtkräfte aufbringen, ohne die Bewegungsrichtung beim Einbringen ändern zu müssen.

Vorteilhafterweise schließt das Gehäuse an seinem geschlossenen Ende mit einer nach außen vergrößerten Standfläche ab. Diese Standfläche hat den Vorteil, daß das Gehäuse mit der darin befindlichen Elektrode aufrecht abgestellt werden kann, beispielsweise in einem Lagerregal. In dieser Stellung läßt sich der Zustand relativ leicht kontrollieren. Da der sensitive Teil der Elektrode in den meisten Fällen am Ende des Schaftes angeordnet ist, also am weitesten in das Gehäuse hineinragt, ragt der sensitive Teil damit auch relativ weit in die Aufbewahrungsflüssigkeit hinein. Hauptsächlich der sensitive Teil muß aber von Flüssigkeit umgeben sein. Sollte daher der Flüssigkeitsspiegel in dem Gehäuse einmal absinken, wird der sensitive Teil der Elektrode erst relativ spät erreicht werden, so daß auch bei einem kleinen Flüssigkeitsverlust die Lagerfähigkeit nicht nennenswert beeinträchtigt wird. Wenn nur die Standfläche vergrößert ist, ist es nicht notwendig, das Volumen des Vorratsraumes zu vergrößern. Die dort eingebrachte Flüssigkeitsmenge kann also kleingehalten werden.

Vorzugsweise ist die Standfläche durch einen umlaufenden ersten Bund gebildet. Dies erleichtert die Handhabung. Im Gegensatz zu einzelnen vorstehenden Vorsprüngen besteht hier keine Gefahr, daß man hängenbleibt oder sich verletzt.

Bevorzugterweise weist das Gehäuse in seinem dem offenen Ende benachbarten Viertel einen umlaufenden zweiten Bund auf. Dieser Bund dient zum Schutz des aus dem Gehäuse herausragenden Teil der Elektrode. Wenn das Gehäuse einmal auf der Seite abgelegt wird, behält der aus dem Gehäuse herausragende Teil der Elektrode immer einen Abstand zur Auflagefläche, wenn die Gewichte richtig austariert sind. Dies ist insbesondere dann der Fall, wenn der Schwerpunkt der Anordnung auf der Seite des zweiten Bundes liegt, die dem geschlossenen Ende des Gehäuses benachbart ist.

Vorteilhafterweise ist der zweite Bund im Bereich der Verbindungsstelle von Gehäuse und Elektrode angeordnet. Der zweite Bund trägt damit zu einer mechanischen Verstärkung des Gehäuses in dem Bereich bei, in dem die größten nach außen wirkenden Kräfte auftreten. Man muß daher beim Einsetzen der Elektrode in das Gehäuse nicht besonders vorsichtig sein. Die Dichtigkeit kann durch relativ große Einschraub- oder Eindrückkräfte verbessert werden.

Vorzugsweise weisen der erste und/oder der zweite Bund in Umfangsrichtung eine von einer Kreisform abweichende Ausformung auf. Falls die Anordnung während des Aufstellens oder kurz danach einmal umfallen sollte, kann sie aufgrund dieser Ausformung nicht von einem Tisch oder aus einem Regal herausrollen und auf den Boden fallen. Vielmehr wird sie spätestens dann angehalten werden, wenn die Ausformung auf die Auflagefläche kommt.

Die Ausformung ist bevorzugterweise durch eine Abflachung gebildet. Eine derartige Abflachung ist relativ leicht herzustellen. Sie hat darüberhinaus den Vorteil, daß in einem Lager die einzelnen Anordnungen dichter zusammengestellt werden können.

Auch ist bevorzugt, daß die Ausformungen von erstem und zweitem Bund zueinander ausgerichtet sind. Sie liegen also in Axial- oder Längsrichtung hintereinander. Die Anordnung bleibt also immer in einer vordefinierten Lage liegen, wenn sie umgefallen ist oder auf der Seite abgelegt wird. Dies kann man beispielsweise auch noch zu weiteren Kontrollen ausnutzen. Beispielsweise kann man feststellen, ob die Elektrode bzw. ihr sensitiver Teil auch in einer definierten liegenden Stellung noch von der Aufbewahrungsflüssigkeit bedeckt ist.

Mit Vorteil besteht das Gehäuse aus einem gegen eine Kalibrierlösung unempfindlichen Material. Damit kann das Gehäuse bei der Erstinbetriebnahme der Elektroden als Kalibriergefäß benutzt werden. Praktisch alle Elektroden müssen vor ihrem ersten Einsatz kalibriert werden, d.h. sie müssen in eine Kalibrierlösung (Pufferlösung) eingetaucht und am Meßgerät auf einen bestimmten Wert abgeglichen werden. Wenn man hierzu das Gehäuse verwenden kann, werden keine zusätzlichen Gefäße benötigt. Insbesondere die Standfestigkeit des Gehäuses ist hierbei von Vorteil. Beim Kalibrieren ist es nämlich in der Regel notwendig, die Elektrode für längere Zeit in die Pufferlösung einzutauchen und dabei beide Hände frei zu haben, um das Meßgerät entsprechend einzustellen. Hier ist das Gehäuse dann sehr hilfreich.

Vorzugsweise ist das Gehäuse als Spritzgußteil ausgebildet. Spritzgußteile sind in der Regel relativ preisgünstig in der Herstellung. Dennoch lassen sich die gewünschten Formen mit der notwendigen Genauigkeit erzeugen, was insbesondere im Bereich der Verbindungsstelle zwischen Elektrode und Gehäuse wünschenswert ist. Als Material läßt sich vorzugsweise Kunststoff verwenden, beispielsweise Polycarbonat.

Auch ist bevorzugt, daß der Vorratsraum zumindest zu 80 % mit einer Aufbewahrungsflüssigkeit gefüllt ist. Eine vollständige Füllung des Vorratsraumes ist in der Regel nicht notwendig und meistens auch nicht erwünscht, um gegebenenfalls eine Wärmeausdehnungsmöglichkeit zuzulassen. Der angegebene Füllungsgrad gibt aber eine relativ große Sicherheit dafür, daß die Flüssigkeit auch bei einer längeren Lagerdauer noch zumindest soweit vorhanden ist, daß der sensitive Teil der Elektrode abgedeckt ist.

Die Erfindung betrifft auch eine Verwendung der Transport- und Lageranordnung für eine Elektrode zum Rücksenden einer gebrauchten Elektrode an den Hersteller oder eine Sammelstelle.

Hierbei zeigt sich ein großer Vorteil des Gehäuses, nämlich seine Wiederverwendbarkeit. Meßelektroden, insbesondere pH- und Redox-Elektroden, haben technologiebedingt eine relativ kurze Lebensdauer, d.h. sie müssen spätestens alle 12 bis 14 Monate ausgewechselt werden. Da diese Meßelektroden mit Elektrolyt und Edelmetallen gefüllt sind, handelt sich um Sondermüll, der nicht immer problemlos entsorgt werden kann. Wenn man nun beim Austauschen von Elektroden die oben geschilderte Elektrodentransport- und -Lageranordnung verwendet, kann man die gebrauchte Elektrode wieder verpacken und beispielsweise an den Hersteller oder eine entsprechende Sammelstelle zurückschicken. Das Transportgefäß, nämlich das Gehäuse steht mit der Anlieferung der frischen Elektrode zur Verfügung, so daß die Rücksendung praktisch keine Probleme macht. Gegebenenfalls kann man bereits die Umverpackung des Gehäuses so vorbereiten, daß die Elektrodentransport- und -Lageranordnung mit der nunmehr gebrauchten Elektrode in der gleichen Umverpackung entsprechend adressiert an eine Entsorgungsstelle zurückgesendet werden kann.

Die Erfindung betrifft auch eine Verwendung der Transport- und Lageranordnung für eine Elektrode zum Kalibrieren der Elektrode, wobei vor dem Einbau der frischen Elektrode die frische Elektrode in einer in das Gehäuse gefüllten Kalibrierungsflüssigkeit kalibriert wird.

Die Erfindung wird im folgenden anhand eines bevorzugten Ausführungsbeispiels in Verbindung mit der Zeichnung beschrieben. Hierin zeigen:
- Fig. 1: einen Querschnitt durch eine Elektrodentansport- und -Lageranordnung im Schnitt I-I nach Fig. 2,
- Fig. 2: eine Draufsicht auf ein Gehäuse und
- Fig. 3: eine Seitenansicht der Elektrodentransport- und -Lageranordnung.

Eine Elektrodentransport- und -Lageranordnung 1 weist eine Elektrode 2 und ein Gehäuse 3 auf. Die Elektrode 2 ist eine elektrochemische Meßelektrode mit einem sensitiven Bereich 4, der an der Spitze eines Schaftes 5 angeordnet ist. Der Schaft erstreckt sich von dem sensitiven Bereich 4 bis zu einer Gewindebuchse 6, die im vorliegenden Fall mit einem PG 13,5-Außengewinde 7 versehen ist. Derartige Elektroden an sich sind bekannt. Mit diesem Außengewinde 7 wird die Elektrode 2 üblicherweise in eine Meßanordnung eingeschraubt, um stationär die Größen zu messen, für die sie vorgesehen ist, z.B. den pH-Wert oder das Redoxpotential. Der innere Aufbau derartiger Elektroden an sich ist ebenfalls bekannt. Die Elektrode 2 enthält vielfach einen Elektrolyten 8 und ein Metall 10, insbesondere ein Edelmetall, wie beispielsweise Silber. Der Elektrolyt 8 ist im vorliegenden Ausführungsbeispiel von einer Membran 9 abgedeckt. Die Membran 9 bildet damit die Hauptaußenfläche des sensitiven Bereichs 4. Dieser sensitive Bereich 4 muß während der Lagerung und während des Transports der Elektrode 2 permanent von einer Aufbewahrungsflüssigkeit 11 bedeckt sein. Diese Aufbewahrungsflüssigkeit ist vielfach ebenfalls eine Elektrolytlösung, beispielsweise KCl.

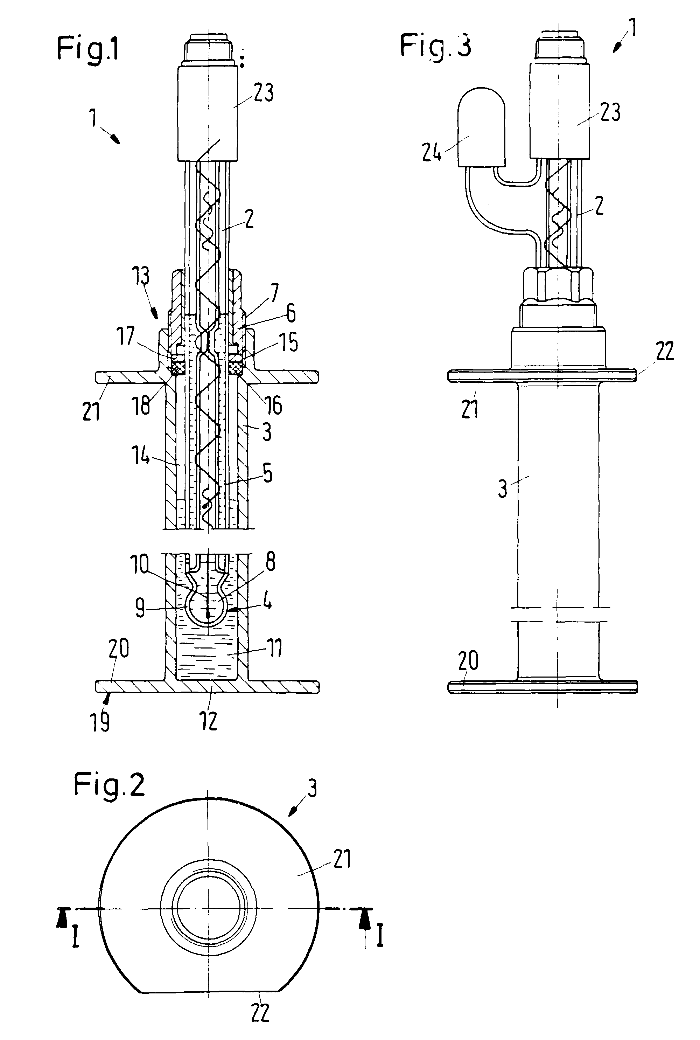

Das Gehäuse 3 ist als Hohlzylinder mit einem geschlossenen Ende 12 und einem offenen Ende 13 ausgebildet. Das Gehäuse 3 bildet damit einen Vorratsraum 14, der zumindest 80 % seines Volumens mit der Flüssigkeit 11 gefüllt ist. Aus Gründen der Übersicht ist in den Fig. 1 und 3 ein Teil der Länge des Gehäuses 3 und der Elektrode 2 nicht dargestellt.

Das Gehäuse 3 weist an seinem offenen Ende 13 ein Innengewinde 15 auf, in daß das Außengewinde 7 der Elektrode 2 eingeschraubt ist. Die Elektrode 2 ist üblicherweise werkseitig mit einem O-Ring 16 versehen, der am schaftseitigen Ende des Innengewindes 15 angeordnet ist. Dieser O-Ring 16 liegt an einem umlaufenden Vorsprung 17 der Gewindebuchse 6 an. Beim Einschrauben wird der O-Ring 16 gegen eine umlaufende Schulter 18 im Gehäuse 3 gedrückt. Auch wenn die Elektrode 2 nur per Hand in das Gehäuse 3 eingeschraubt wird, dichtet der O-Ring 16 die Verbindung zwischen Gehäuse 3 und Elektrode 2 ab und zwar so gut, daß praktisch keine Aufbewahrungsflüssigkeit 11 verlorengehen kann, auch dann nicht, wenn diese eine ausgeprägte Kriechneigung hat. Der O-Ring 16 dichtet im späteren Einsatz der Elektrode 2 gleichzeitig die Meßstelle ab. Beschädigungen des O-Ringes 16 lassen sich daher frühzeitig erkennen. Wenn der Stand der Flüssigkeit 11 im Vorratsraum 14 während der Lagerung absinkt, kann dies ein Zeichen dafür sein, daß der O-Ring 16 nicht dicht ist.

Das Gehäuse 3 weist an seinem geschlossenen Ende 12 eine vergrößerte Standfläche 19 auf, die durch einen umlaufenden Bund 20 gebildet ist. Der Bund 20 schließt mit dem geschlossenen Ende 12 des Gehäuses 3 ab. Durch den Bund 20 wird die Standsicherheit des Gehäuses 3 ganz beträchtlich erhöht. Die Elektroden 2 können nun stehend gelagert werden. Bei dieser Lagerung ist sichergestellt, daß der sensitive Bereich 4 der Elektrode 2 immer möglichst weit in die Aufbewahrungsflüssigkeit 11 eingetaucht ist. Auch bei einem Absinken des Flüssigkeitsspiegels im Vorratsraum 14 dauert es relativ lange, bis der sensitive Bereich 4 trocken fällt.

Darüber hinaus hat die erhöhte Standfestigkeit durch den Bund 20 noch einen weiteren Vorteil: Vor dem ersten Einsatz müssen die Elektroden 2 üblicherweise kalibriert werden. Hierzu müssen sie in einer Pufferlösung an einem Meßgerät auf einen bestimmten Wert abgeglichen werden. Dabei ist es notwendig, die Elektrode 2 für längere Zeit in die Pufferlösung einzutauchen und dabei beide Hände frei zu haben, um das Meßgerät einzustellen. Da das Gehäuse 3 nun die erhöhte Standsicherheit hat, kann man dieses als Kalibrierungsgefäß verwenden, d.h. man kann Kalibrierungslösung (Pufferlösung) in den Vorratsraum 14 einfüllen und die Elektrode 2 wieder in das Gehäuse 3 einsetzen. Da der Vorratsraum 14 nur ein relativ kleines Volumen hat, ist der Verbrauch an Kalibrierungslösung entsprechend gering.

Ferner weist das Gehäuse 3 einen zweiten Bund 21 auf, der im Bereich seines offenen Endes 13 angeordnet ist, genauer gesagt, in dem Viertel seiner Längserstreckung, das dem offenen Ende 13 benachbart ist. Der zweite Bund 21 ist hierbei möglichst im Bereich der Verbindung zwischen Elektrode 2 und Gehäuse 3 angeordnet, im vorliegenden Fall dort, wo der O-Ring 16 durch die eingeschraubte Elektrode 2 gegen das Gehäuse 3 gedrückt wird. Der zweite Bund 21 verleiht hier dem Gehäuse 3 eine erhöhte Festigkeit in Radialrichtung, so daß man hier durchaus höhere Dichtungskräfte verwenden kann.

Wie insbesondere aus den Fig. 2 und 3 ersichtlich ist, sind die beiden Bünde 20, 21 abgeflacht, d.h. sie weisen einen Bereich 22 auf, in dem ihre Form von der Kreisform abweicht. Der Bereich 22 wird vielmehr durch eine Sehne an einen Kreis gebildet. Die entsprechende Bereiche 22 der beiden Bünde 20, 21 sind in Längsrichtung übereinstimmend oder fluchtend angeordnet. Sollte die Anordnung 1 während der Lagerung oder des Transportes einmal umfallen, kann ein Wegrollen der Anordnung 1 dadurch verhindert werden. Die Anordnung 1 wird vielmehr spätestens dann anhalten, wenn sie auf den Bereich 22 zu liegen kommt. Die Anordnung 1 kann also selbst dann, wenn sie umfällt, nur unter widrigen Umständen von einem Tisch herabfallen.

Während der erste Bund 20 für eine erhöhte Standsicherheit sorgt, dient der zweite Bund 21 dazu, den aus dem Gehäuse 3 herausragenden Abschnitt 23 der Elektrode 2 vor Beschädigungen zu schützen, wenn die Anordnung 1 liegt. Hierzu ist der Schwerpunkt der Anordnung auf der Seite des Bundes 21 angeordnet, die dem geschlossenen Ende 12 benachbart ist. Wenn die Anordnung 1 auf der Seite liegt, liegt sie immer auf den Bünden 20, 21, nicht jedoch auf dem Abschnitt 23 und zwar auch dann nicht, wenn der Abschnitt 23 mit seitlich vorstehenden Zubehörteilen 24 versehen ist, die nicht über den Bund 21 vorstehen.

Die Füllung des Vorratsraums 14 zu mindestens 80 % (dies gilt für den Zustand mit eingesetzter Elektrode 2) gewährleistet, daß der sensitive Bereich 4 auch dann mit der Aufbewahrungsflüssigkeit 11 bedeckt ist, wenn die Anordnung 1 auf der Seite liegt.

Das Gehäuse 3 ist aus einem transparenten Kunststoff hergestellt, so daß man jederzeit den Stand der Flüssigkeit 11 kontrollieren kann. Stattdessen kann man auch ein Kontrollfenster im Gehäuse 3 vorsehen, das jedoch nicht dargestellt ist.

Der Schaft 5 der Elektrode 2 ist vom Gehäuse 3 mit allseitigem Abstand umgeben. Das Gehäuse 3 ist formstabil, d.h. es verformt sich beim Auftreten von äußeren Kräften, wie beispielsweise Stößen oder ähnlichem, nicht oder nicht nennenswert. Es wird also den Schaft 5 und den sensitiven Bereich 4 der Elektrode 2 nicht berühren. Hierdurch ergibt sich einerseits ein mechanischer Schutz der Elektrode 2, andererseits aber auch die Gewährleistung das zumindest der sensitive Bereich 4 immer allseitig von Flüssigkeit 11 umgeben ist. Eine lokale Veränderung kann sich nicht dadurch ergeben, daß der sensitive Bereich punkt- oder stellenweise an der Wand des Gehäuses 3 anliegt.

Das Gehäuse 3 ist wiederverwendbar. Viele elektrochemische Meßelektroden, insbesondere pH- und Redox-Elektroden, haben technologiebedingt eine relativ kurze Lebensdauer, d.h. sie müssen spätestens alle 12 bis 14 Monate gegen eine frische Elektrode ausgewechselt werden. Da diese elektrochemischen Meßelektroden meistens mit Elektrolyt und Edelmetallen befüllt sind, handelt es sich hierbei um Sondermüll, was Probleme bei der Entsorgung verursacht. Die meisten Anwender sind nicht auf eine Entsorgung derartiger Elektroden eingerichtet.

Mit dem Gehäuse 3, mit dem eine frische Elektrode angeliefert wird, kann man dieses Problem relativ einfach entschärfen. Der Anwender baut die gebrauchte Elektrode aus der Meßstelle aus. Er entnimmt die frische Elektrode 2 dem Gehäuse 3 und setzt sie, gegebenenfalls nach einer Kalibrierung, für die auch das Gehäuse 3 verwendet werden kann, in die Meßstelle ein. Danach ist das Gehäuse 3 frei und kann nun die gebrauchte Elektrode aufnehmen. Die gebrauchte Elektrode kann dann, geschützt durch das Gehäuse 3, wieder zu einer Entsorgungsstation oder zum Hersteller zurücktransportiert werden.

## Patentansprüche

1. Elektrodentransport- und -Lageranordnung mit einer Elektrode (2) und einer Hülle, in die die Elektrode (2) zumindest mit ihrem sensitiven Teil (4) hineinragt und die zusammen mit der Elektrode (2) einen Vorratsraum (14) für eine Flüssigkeit (11) umschließt, wobei die Hülle als formstabiles Gehäuse (3) ausgebildet ist und zwischen Gehäuse (3) und Elektrode (2) eine Dichtungsanordnung (16) vorgesehen ist, dadurch gekennzeichnet, daß das Gehäuse (3) mit der Elektrode (2) verbunden ist, wobei die Elektrode (2) ein Außengewinde (7) und das Gehäuse (3) an seinem offenen Ende (13) ein Innengewinde (15) aufweist und die Elektrode (2) und das Gehäuse (3) miteinander verschraubt sind und die Dichtungsanordnung einen Dichtring (16) aufweist, der zwischen der Elektrode (2) und dem Gehäuse (3) eingespannt ist.

2. Anordnung nach Anspruch 1, dadurch gekennzeichnet, daß die Elektrode (2) einen Schaft (5) aufweist, der sich von einem Abschnitt (6) zur Befestigung des Schaftes (5) bis zu einer Spitze erstreckt und der den sensitiven Teil (4) enthält, wobei sich das Gehäuse (3) zumindest über die Länge des Schaftes (5) erstreckt.

3. Anordnung nach Anspruch 2, dadurch gekennzeichnet, daß das Gehäuse (3) den Schaft (5) mit allseitigem Abstand umgibt.

4. Anordnung nach einem der Ansprüche 1 bis 3, dadurch gekennzeichnet, daß das Gehäuse (3) ein Flüssigkeitskontrollfenster aufweist oder aus durchsichtigem Material besteht.

5. Anordnung nach einem der Ansprüche 1 bis 4, dadurch gekennzeichnet, daß die Dichtungsanordnung (16) dem Außengewinde (7) benachbart angeordnet ist.

6. Anordnung nach einem der Ansprüche 1 bis 5, dadurch gekennzeichnet, daß der Dichtring (16) zwischen einem umlaufenden Vorsprung (17) an der Elektrode (2) und einer umlaufenden Schulter (18) im Gehäuse (3) eingespannt ist.

7. Anordnung nach einem der Ansprüche 1 bis 6, dadurch gekennzeichnet, daß das Gehäuse (3) an seinem geschlossenen Ende (12) mit einer nach außen vergrößerten Standfläche (19) abschließt.

8. Anordnung nach Anspruch 7, dadurch gekennzeichnet, daß die Standfläche (19) durch einen umlaufenden ersten Bund (20) gebildet ist.

9. Anordnung nach einem der Ansprüche 1 bis 8, dadurch gekennzeichnet, daß das Gehäuse (3) in seinem dem offenen Ende (13) benachbarten Viertel einen umlaufenden zweiten Bund (21) aufweist.

10. Anordnung nach Anspruch 9, dadurch gekennzeichnet, daß der zweite Bund (21) im Bereich der Verbindungsstelle von Gehäuse (3) und Elektrode (2) angeordnet ist.

11. Anordnung nach einem der Ansprüche 8 bis 10, dadurch gekennzeichnet, daß der erste und/oder der zweite Bund (20, 21) in Umfangsrichtung eine von einer Kreisform abweichende Ausformung (22) aufweisen.

12. Anordnung nach Anspruch 11, dadurch gekennzeichnet, daß die Ausformung (22) durch eine Abflachung gebildet ist.

13. Anordnung nach Anspruch 11 oder 12, dadurch gekennzeichnet, daß die Ausformungen (22) von erstem und zweitem Bund (20, 21) zueinander ausgerichtet sind.

14. Anordnung nach einem der Ansprüche 1 bis 13, dadurch gekennzeichnet, daß das Gehäuse (3) aus einem gegen eine Kalibrierlösung unempfindlichen Material besteht.

15. Anordnung nach einem der Ansprüche 1 bis 14, dadurch gekennzeichnet, daß das Gehäuse (3) als Spritzgußteil ausgebildet ist.

16. Anordnung nach einem der Ansprüche 1 bis 15, dadurch gekennzeichnet, daß der Vorratsraum (14) zumindest zu 80 % mit einer Aufbewahrungsflüssigkeit (11) gefüllt ist.

17. Verwendung der Transport- und Lageranordnung für eine Elektrode nach einem der Ansprüche 1 bis 16 zum Rücksenden einer gebrauchten Elektrode (2) an den Hersteller oder eine Sammelstelle.

18. Verwendung der Transport- und Lageranordnung für eine Elektrode nach einem der Ansprüche 1 bis 16 zum Kalibrieren der Elektrode (2), wobei vor dem Einbau der frischen Elektrode (2) die frische Elektrode (2) in einer in das Gehäuse (3) gefüllten Kalibrierungsflüssigkeit kalibriert wird.

## Claims

1. Electrode transport and storage device having an electrode (2) and a casing, into which the electrode (2) protrudes, at least with its sensitive part (4), and which together with the electrode (2) encloses a storage space (14) for a liquid (11), the casing being designed as a dimensionally stable housing (3) and a sealing device (16) being provided between the housing (3) and the electrode (2), characterized in that the housing (3) is connected to the electrode (2), the electrode (2) having an external thread (7) and the housing (3) having an internal thread (15) at its open end (13), and the electrode (2) and the housing (3) being screwed to each other, and the sealing device having a sealing ring (16), which is clamped between the electrode (2) and the housing (3).

2. Device according to Claim 1, characterized in that the electrode (2) has a shank (5) which extends from a portion (6) for fastening the shank (5) up to a tip and which contains the sensitive part (4), the housing (3) extending at least over the length of the shank (5).

3. Device according to Claim 2, characterized in that the housing (3) surrounds the shank (5) with a spacing on all sides.

4. Device according to one of Claims 1 to 3, characterized in that the housing (3) has a liquid inspection window or consists of transparent material.

5. Device according to one of Claims 1 to 4, characterized in that the sealing device (16) is arranged adjacent to the external thread (7).

6. Device according to one of Claims 1 to 5, characterized in that the sealing ring (16) is clamped between a peripheral projection (17) on the electrode (2) and a peripheral shoulder (18) in the housing (3).

7. Device according to one of Claims 1 to 6, characterized in that the housing (3) terminates at its closed end (12) with an outwardly enlarged standing area (19).

8. Device according to Claim 7, characterized in that the standing area (19) is formed by a peripheral first collar (20).

9. Device according to one of Claims 1 to 8, characterized in that the housing (3) has in its quarter adjacent to the open end (13) a peripheral second collar (21).

10. Device according to Claim 9, characterized in that the second collar (21) is arranged in the region of the connecting point of the housing (3) and the electrode (2).

11. Device according to one of Claims 8 to 10, characterized in that the first and/or the second collar (20, 21) have in the circumferential direction a shaped portion (22) deviating from a circular shape.

12. Device according to Claim 11, characterized in that the shaped portion (22) is formed by a flattened portion.

13. Device according to Claim 11 or 12, characterized in that the shaped portions (22) of the first and second collars (20, 21) are aligned with respect to each other.

14. Device according to one of Claims 1 to 13, characterized in that the housing (3) consists of a material insensitive to a calibrating solution.

15. Device according to one of Claims 1 to 14, characterized in that the housing (3) is formed as an injection moulding.

16. Device according to one of Claims 1 to 15, characterized in that the storage space (14) is filled to at least 80% with a storing liquid (11).

17. Use of the transport and storage device for an electrode according to one of Claims 1 to 16 for returning a used electrode (2) to the manufacturer or to a collecting point.

18. Use of the transport and storage device for an electrode according to one of Claims 1 to 16 for calibrating the electrode (2), the fresh electrode (2) being calibrated in a calibrating liquid, with which the housing (3) is filled, before the said fresh electrode (2) is fitted in.

## Revendications

1. Agencement de transport et d'entreposage d'électrode, comportant une électrode (2) et un manchon dans lequel l'électrode (2) pénètre au moins par sa partie sensible (4), qui englobe en même temps que l'électrode (2) un espace de réserve (14) pour un liquide (11), le manchon étant configuré comme boîtier (3) de forme stable, et entre le boîtier (3) et l'électrode (2) est prévu un agencement d'étanchéité (16), caractérisé en ce que le boîtier (3) est relié à l'électrode (2), l'électrode (2) présentant un filet extérieur (7) et le boîtier (3) un filet intérieur (15) à son extrémité ouverte (13), l'électrode (2) et le boîtier (3) étant vissés l'un sur l'autre, et l'agencement d'étanchéité présente une bague d'étanchéité (16) qui est serrée entre l'électrode (2) et le boîtier (3).

2. Agencement selon la revendication 1, caractérisé en ce que l'électrode (2) présente un corps allongé (5) qui s'étend depuis un tronçon (6) de fixation de la tige (5) jusqu'à une pointe, et qui contient la partie sensible (4), le boîtier (3) s'étendant au moins sur la longueur du corps allongé (5).

3. Agencement selon la revendication 2, caractérisé en ce que le boîtier (3) entoure le corps allongé (5) à distance sur tous les côtés.

4. Agencement selon l'une des revendications 1 à 3, caractérisé en ce que le boîtier (3) présente une fenêtre de contrôle du liquide ou est réalisé en matériau transparent.

5. Agencement selon l'une des revendications 1 à 4, caractérisé en ce que l'agencement d'étanchéité (16) est disposé en position voisine au filet extérieur (7).

6. Agencement selon l'une des revendications 1 à 5, caractérisé en ce que la bague d'étanchéité (16) est serrée entre une saillie périphérique (17) de l'électrode (2) et un épaulement périphérique (18) du boîtier (3).

7. Agencement selon l'une des revendications 1 à 6, caractérisé en ce que le boîtier (3) se raccorde à son extrémité fermée (12) à une surface de pose (19) agrandie vers l'extérieur.

8. Agencement selon la revendication 7, caractérisé en ce que la surface de pose (19) est formée par un premier collet périphérique (20).

9. Agencement selon l'une des revendications 1 à 8, caractérisé en ce que le boîtier (3) présente dans son quart voisin de l'extrémité ouverte (13) un deuxième collet périphérique (21).

10. Agencement selon la revendication 9, caractérisé en ce que le deuxième collet (21) est disposé dans la région de l'emplacement de liaison du boîtier (3) et de l'électrode (2).

11. Agencement selon l'une des revendications 8 à 10, caractérisé en ce que le premier et/ou le deuxième collet (20, 21) présentent dans le sens périphérique une déformation (22) qui diffère de la forme d'un cercle.

12. Agencement selon la revendication 11, caractérisé en ce que la déformation (22) est formée par un aplatissement.

13. Agencement selon la revendication 11 ou 12, caractérisé en ce que les déformations (22) du premier et du deuxième collet (20, 21) sont tournées l'une vers l'autre.

14. Agencement selon l'une des revendications 1 à 13, caractérisé en ce que le boîtier (3) est constitué d'un matériau insensible vis-à-vis d'une solution d'étalonnage.

15. Agencement selon l'une des revendications 1 à 14, caractérisé en ce que le boîtier (3) est configuré comme pièce moulée par injection.

16. Agencement selon l'une des revendications 1 à 15, caractérisé en ce que l'espace de réserve (14) est rempli au moins à 80% d'un liquide de réserve (11).

17. Utilisation de l'agencement de transport et d'entreposage d'une électrode selon l'une des revendications 1 à 16, pour le renvoi d'une électrode (2) usée au fabricant ou à un point de collecte.

18. Utilisation de l'agencement de transport et d'entreposage d'une électrode selon l'une des revendications 1 à 16, pour l'étalonnage de l'électrode (2), et avant le montage de l'électrode (2) fraîche, l'électrode (2) fraîche est étalonnée dans un liquide d'étalonnage remplissant le boîtier (3).
